# EUROPEAN PATENT SPECIFICATION

(11) **EP 2 452 203 B1**
(45) Date of publication and mention of the grant of the patent: **03.12.2014**
(21) Application number: 09780415.7
(22) Date of filing: 10.07.2009
(51) Int. Cl.: G01S 5/14, H04B 7/00, G08B 21/10

(54) **A SYSTEM AND A METHOD FOR EMPLOYING ELECTRONIC DEVICES TO LOCATE SURVIVORS IN THE EVENT OF CATASTROPHIC STRUCTURE COLLAPSE**
EIN SYSTEM UND EINE METHODE ZUR NUTZUNG ELEKTRONISCHER GERÄTE ZUR LOKALISIERUNG VON ÜBERLEBENDEN BEI KATASTROPHALEM STRUKTURVERSAGEN
SYSTÈME ET PROCÉDÉ POUR EMPLOYER DES DISPOSITIFS ÉLECTRONIQUES POUR LOCALISER DES SURVIVANTS DANS LE CAS DE L'EFFONDREMENT D'UNE STRUCTURE SUITE À UNE CATASTROPHE

(43) Date of publication of application: 16.05.2012
(73) Proprietor: NEC Europe Ltd., 69115 Heidelberg (DE)
(72) Inventor: KOHRING, Gregory Allen, 53773 Hennef (DE); LO IACONO, Luigi, 53225 Bonn (DE)
(74) Representative: Vossius & Partner
(86) International application number: PCT/EP2009/058797
(87) International publication number: WO 2011/003458

(56) References cited:
- JP-A- 2002 365 356
- JP-A- 2003 010 348
- JP-A- 2006 098 128

## Description

The present invention relates to a system and method for locating and rescuing survivors after a large man-made structure has collapsed catastrophically. In particular, the invention relates to identifying and locating hollow spaces after the collapse of the structure in which survivors may be located.

Locating and rescuing the survivors after a large man-made structure has collapsed catastrophically is a race against time. Important questions rescuers have to ask when approaching the collapsed structure or building are: Where are the survivors buried? and: Where should one start digging in order to have the best chance of saving the largest possible number of lives?

One standard approach today is to use specially trained dogs to locate survivors after a structure has collapsed. However, this approach is restricted to locating survivors towards positions close to the surface of a heap of rubble. Even highly trained dogs cannot locate survivors deeper than a few meters.

In US-A-4,998,282, the use of borescopes to penetrate the rubble and to find survivors is described. The borescope system is described to ascertain the survival of victims, detect the conditions of circumstances to which the victims are confined, and to give appropriate medical treatment to survivors, if any. However, this technique is mainly used in conjunction with other technologies, since it is not practical to make a large number of boreholes into a heap of rubble.

Furthermore, the use of cell phones equipped with a special chip which responds automatically when contacted by emergency workers is described in US-A-2006/0166696. When rescuers approach a collapsed structure, signals which are detected by the cell phones are sent out. A cell phone authenticating the signal will respond and transmit its location. This approach, however, requires all phones to be equipped with a special chip and would further require all building occupants to acquire such a phone. Furthermore, the people always have to have their phone with them, which is not always guaranteed, in particular when people are working in the building. The use of cell phones to locate any survivors also has severe privacy problems. In order to make sure all rescue crews have the appropriate authentication credentials to contact the cell phones in an emergency, the credentials would have to be widely distributed, increasing the likelihood that they would fall into the wrong hands. Anyone who had the appropriate credentials could then essentially query any phone to find its location and track its owner.

In JP 2003-010348 A, a network system for collecting disaster information or the like in underground or a building structure is disclosed. JP 2006-098128 A describes a collapse detector and a method which enable the detection of a collapse over a wide range, grasping of a fine variation, and easy separation of the collapse from a phenomenon other than the collapse. JP 2002-365356 A discloses a GPS system capable of receiving GPS radio waves even in an underground or building structure equally to on the ground to measure the position.

There is thus a need for a method and system to locate survivors which overcomes the above problems. In particular, the system and method should be independent of devices that have to be carried by the occupants of the structure and should further allow location of survivors throughout the collapsed building. Additionally, the system preferably should be capable of determining the state of health of the potential survivors.

These objects are achieved with the features of the claims.

After the collapse of a man-made structure or building potential survivals are located with a high probability in hollow spaces that provide sufficient space. Thus, in order to be able to locate potential survivors, hollow spaces of sufficient size should be localized. Preferably, it should then be possible to determine whether or not any survivors are present in the hollow spaces found.

The present invention is based on the idea to install tiny electronic devices in a structural building which have a high probability of surviving a catastrophic collapse due to their small size and that are able to determine and to provide information on their location after the collapse. The tiny electronic devices have a high probability to be co-located within a hollow space occupied by a survivor. Thus, the presence of such a tiny device or any accumulation or clustering of the tiny devices in certain locations may be an indication of a hollow space where a potential survivor may be located.

Accordingly, according to the present invention, the method for locating survivors after a collapse of a man-made structure comprises distributing a plurality of electronic devices in the structure, the electronic devices each comprising a wireless transmitter. Preferably, the electronic devices further comprise an environmental sensor, such as an infrared sensor, an acoustic sensor or a video sensor, in order to determine if any survivors are in the same hollow space as the electronic device. The environmental sensor may further be able to determine the ambient conditions of the hollow space, e.g. temperature or oxygen level, in order to ascertain the chances a survivors will still be alive when rescued.

The electronic devices then self-organize into a network to record the positions of the electronic devices in three dimensions relative to each other. In order to do so, at least one of the electronic device should have information on its location. To determine the locations of the other devices relative to each other and/or relative to the structure, a bootstrapping method may be used, based on triangulation techniques or. Alternatively, GPS coordinates may be given to each electronic device when it is deployed, or each electronic device may be provided with a GPS receiver. Upon a collapse of the structure, at least one additional electronic device is introduced into the network. Based on the known position of the additional electronic device, the position of the previously installed electronic devices may be re-calculated. The re-calculated positions of the electronic devices after the collapse may be used to determine a position of a potential survivor.

The method of the present invention further comprises calculating the change of position of each electronic device before and after the collapse, for determining the trajectory of different parts of the structure during the collapse. This information on how the structure collapsed may be important when deciding how to remove the top layer of the rubble in order not to jeopardize the lives of those who survived the initial collapse.

The present invention further provides a system for locating survivors after a collapse of a man-made structure, comprising a plurality of electronic devices each comprising a wireless transmitter adapted to self-organize into a network for recording the relative positions of each device in the network. The electronic devices preferably are minute stand-alone devices of a few cubic millimetres in size and are preferably composed of a system-on-a-chip (SOC) technology together with a wireless transmitter and, optionally, one or more environmental sensors. The transmitter preferably has a range in the order of 10 meter.

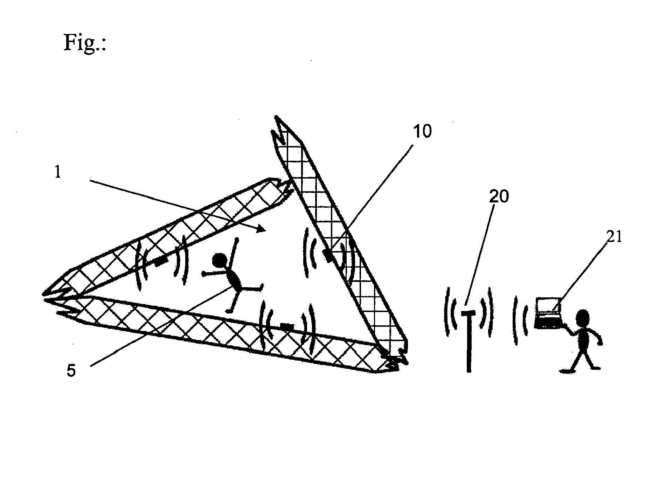

In the following, an embodiment of the present invention is described with reference to the appended Figure that schematically shows the use of a system for locating survivors according to an embodiment of the invention.

The electronic devices used according to the embodiment conveniently are called "Specks". These Specks are minute stand-alone devices of a few cubic millimetres in size; preferably 100 cubic millimetres or less. They are composed of SOC (system-on-a-chip) technology together with a wireless transmitter and one ore more environmental sensors. Although currently rather expensive at several hundred dollars a piece, their price is expected to drop rapidly to maybe less than one dollar when they enter mass production. The wireless transmitters usually have a range on the order of 1-10 meters and swarms of them can self-organize to form a network, called a SpeckNet.

In order to help locating survivors of a catastrophic structure collapse, large members of Specks will be distributed throughout the target structure. The Specks can then self-organize into a network, recording their relative locations in three dimensions with respect to each other. To determine their locations relative to the structure, a bootstrapping method is used, whereby at least one Speck, and preferably a number of Specks are informed of their location within the structure. Using triangulation techniques, this information is passed on to the other Specks. Alternatively, one can give GPS coordinates to each Speck when it is deployed, or each Speck may be provided with a GPS receiver.

When the target structure collapses, the Specks will have a high probability of surviving the collapse, mainly because of its tiny size, and to be collocated in hollow spaces along with human survivors. This situation is schematically shown in the Figure. If a hollow space 1 of a sufficient size was maintained during the collapse, this hollow space 1 provides a high chance for people 5 to survive. Thus, locating survivors may be mapped onto the problem of locating hollow spaces of sufficient size and determining whether or not they are occupied by vital casualties. If rescuers 21 arrive they will bring with them additional Specks or larger-scale and more powerful devices 20, which will join the SpeckNet of the survivor Specks 10. These new Specks 20 will transmit new coordinates to the original Specks 10 that can be used to calculate their new relative positions in the SpeckNet. This information, preferably along with the original coordinates, is transmitted back to the new Specks 20 which the rescuers 21 can read and use to recreate the original structure. High performance computer simulations may then be used to determine the path to different parts of the structure or building followed as they collapsed. Knowing how the structure collapsed may be important when the deciding how to remove the top layer of the rubble in order not to jeopardize the lives of those who survived the initial collapse.

The Specks may also use their associated sensors to determine if any survivors are in the same hollow space as themselves. The types of sensors that could be used for this purpose include, but is not limited to: infrared sensors, acoustic sensors and video sensors, etc. If survivors are detected, this information along with the Specks' location is transmitted through the network to the rescuers. The sensors associated with the Speck might also determine the ambient conditions of the hollow space, e.g. temperature or oxygen level, in order to ascertain the chances a survivor will still be alive when rescued. Since the small size of the Specks means that they will have a very good chance of surviving a structural collapse and since they will be cheap enough, one can deploy enough of them to ensure that they will, with high probability, be co-located within a hollow space occupied by a survivor. Using the properties of a self-organizing SpeckNet, it is possible to locate hollow spaces and the survivors in a heap of rubble.

While the invention has been illustrated and described in detail in the foregoing description and the Figure, such illustration and description are to be considered illustrative or exemplary and non-restrictive; the invention is thus not limited to the disclosed embodiments. Features mentioned in connection with one embodiment described herein may also be advantageous as features of another embodiment described herein without explicitly showing these features. Variations to the disclosed embodiments can be understood and effected by those skilled in the art and practising the claimed invention, from a study of the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures can not be used to advantage.

## Claims

1. Method for locating survivors after a collapse of a man-made structure, comprising:
distributing a plurality of electronic devices (10) comprising a wireless transmitter in the structure;
self-organizing the devices (10) into a network and recording the positions of the electronic devices in three dimensions relative to each other using a known position of at least one of the electronic devices;
upon the collapse of the structure, introducing at least one additional electronic device (20) into the network and re-calculating the positions of the electronic devices (10) using the known position of the additional electronic device (20); and
determining a potential position (1) of survivors (5) using the re-calculated positions of the electronic devices after the collapse; **characterized by**
calculating the change of position of each electronic device (10) before and after the collapse for determining the path of different parts of the structure during the collapse.

2. Method according to claim 1, wherein the position of the electronic devices (10) is calculated using a triangulation technique.

3. Method according to claim 1 or 2, wherein the position of at least one of the electronic devices (10) and/or the additional electronic device (20) is determined using a GPS receiver provided in the at least one electronic device (10) and/or the additional electronic devices (20).

4. Method according to any one of the preceding claims, wherein at least some of the electronic devices (10, 20) comprise an environmental sensor.

5. Method according to claim 4, further comprising determining the presence of a survivor (5) in the proximity of an electronic device using the environmental sensor.

6. System for locating survivors after a collapse of a man-made structure comprising a plurality of electronic devices (10) comprising a wireless transmitter distributed in the structure, the devices (10) being adapted to self-organize into a network and to record their positions in three dimensions relative to each other using a known position of at least one of the devices, the system further comprises at least one additional electronic device (20) adapted to be introduced into the network such that the positions of the electronic devices (10) is re-calculated after the collapse of the structure using the known position of the additional electronic device, **characterized in that**
the change of position of each electronic device (10) before and after the collapse can be calculated for determining the path of different parts of the structure during the collapse.

7. System according to claim 6, wherein at least some of the electronic devices (10, 20) comprise an environmental sensor.

8. System according to claim 6 or 7, wherein the electronic devices (10, 20) are system-on-a-chip devices.

9. System according to any one of claims 6 to 8, wherein the size of each electronic device (10, 20) is about 100 cubic millimetres or smaller.

10. System according to any one of claims 6 to 9, wherein the wireless transmitter in each electronic device (10, 20) has a range of about 1-10 meters.

## Patentansprüche

1. Verfahren zum Lokalisieren von Überlebenden nach dem Einsturz einer von Menschen geschaffenen Struktur, mit den Schritten:
Verteilen mehrerer elektronischer Geräte (10), die einen drahtlosen Sender aufweisen, in der Struktur;
Selbstorganisation der Geräte (10) zu einem Netzwerk und Speichern der Positionen der elektronischen Geräte in drei Dimensionen relativ zueinander unter Verwendung einer bekannten Position mindestens eines der elektronischen Geräte;
nach dem Einsturz der Struktur: Hinzufügen mindestens eines zusätzlichen elektronischen Geräts (20) in das Netzwerk und Neuberechnen der Positionen der elektronischen Geräte (10) unter Verwendung der bekannten Position des zusätzlichen elektronischen Geräts (20); und
Bestimmen einer möglichen Position (1) von Überlebenden (5) unter Verwendung der neu berechneten Positionen der elektronischen Geräte nach dem Einsturz;
**gekennzeichnet durch**
Berechnen der Änderung der Position jedes elektronischen Geräts (10) vor und nach dem Einsturz zum Bestimmen des Pfades verschiedener Teile der Struktur während des Einsturzes.

2. Verfahren nach Anspruch 1, wobei die Positionen der elektronischen Geräte (10) unter Verwendung einer Triangulationstechnik berechnet werden.

3. Verfahren nach Anspruch 1 oder 2, wobei die Position mindestens eines der elektronischen Geräte (10) und/oder des zusätzlichen elektronischen Geräts (20) unter Verwendung eines GPS-Empfängers bestimmt wird, der in dem mindestens einen elektronischen Gerät (10) und/oder in den zusätzlichen elektronischen Geräten (20) bereitgestellt wird.

4. Verfahren nach einem der vorangehenden Ansprüche, wobei mindestens einige der elektronischen Geräte (10, 20) einen Umgebungssensor aufweisen.

5. Verfahren nach Anspruch 4, ferner mit dem Schritt zum Bestimmen des Vorhandenseins eines Überlebenden (5) in der Nähe eines elektronischen Geräts unter Verwendung des Umgebungssensors.

6. System zum Lokalisieren von Überlebenden nach dem Einsturz einer von Menschen geschaffenen Struktur, mit mehreren elektronischen Geräten (10), die einen drahtlosen Sender aufweisen und in der Struktur verteilt sind, wobei die elektronischen Geräte (10) dazu geeignet sind, sich selbst zu einem Netzwerk zu organisieren und ihre Positionen in drei Dimensionen relativ zueinander unter Verwendung einer bekannten Position mindestens eines der Geräte zu speichern, wobei das System ferner mindestens ein zusätzliches elektronisches Gerät (20) aufweist, das dazu geeignet ist, dem Netzwerk hinzugefügt zu werden, so dass die Positionen der elektronischen Geräte (10) nach einem Einsturz der Struktur unter Verwendung der bekannten Position des zusätzlichen elektronischen Geräts (20) neu berechnet werden;
**dadurch gekennzeichnet, dass**
die Änderung der Position jedes elektronischen Geräts (10) vor und nach dem Einsturz zum Bestimmen des Pfades verschiedener Teile der Struktur während des Einsturzes berechnet werden kann.

7. System nach Anspruch 6, wobei mindestens einige der elektronischen Geräte (10, 20) einen Umgebungssensor aufweisen.

8. System nach Anspruch 6 oder 7, wobei die elektronischen Geräte (10, 20) System-on-a-Chip-Geräte sind.

9. System nach einem der Ansprüche 6 bis 8, wobei die Größe jedes elektronischen Geräts (10, 20) etwa 100 Kubikmillimeter oder kleiner ist.

10. System nach einem der Ansprüche 6 bis 9, wobei der drahtlose Sender in jedem elektronischen Gerät (10, 20) eine Reichweite von etwa 1 bis 10 Meter hat.

## Revendications

1. Procédé pour localiser des survivants après l'effondrement d'une structure réalisée par l'homme, comprenant : la répartition d'une pluralité de dispositifs électroniques (10) comprenant un émetteur sans fil dans la structure ;
l'auto-organisation des dispositifs (10) en un réseau et l'enregistrement des positions des dispositifs électroniques en trois dimensions les uns par rapport aux autres en utilisant une position connue d'au moins un des dispositifs électroniques ;
lors de l'effondrement de la structure, l'introduction d'au moins un dispositif électronique supplémentaire (20) dans le réseau et le recalcul des positions des dispositifs électroniques (10) en utilisant la position connue du dispositif électronique supplémentaire (20) ; et
la détermination d'une position potentielle (1) de survivants (5) en utilisant les positions recalculées des dispositifs électroniques après l'effondrement ; **caractérisé par**
le calcul du changement de position de chaque dispositif électronique (10) avant et après l'effondrement pour déterminer le trajet des différentes parties de la structure durant l'effondrement.

2. Procédé selon la revendication 1, dans lequel la position des dispositifs électroniques (10) est calculée en utilisant une technique de triangulation.

3. Procédé selon la revendication 1 ou 2, dans lequel la position d'au moins un des dispositifs électroniques (10) et / ou du dispositif électronique supplémentaire (20) est déterminée en utilisant un récepteur GPS prévu dans le au moins un dispositif électronique (10) et / ou les dispositifs électroniques supplémentaires (20).

4. Procédé selon l'une quelconque des revendications précédentes, dans lequel au moins certains des dispositifs électroniques (10, 20) comprennent un capteur environnemental.

5. Procédé selon la revendication 4, comprenant en outre la détermination de la présence d'un survivant (5) à proximité d'un dispositif électronique utilisant le capteur environnemental.

6. Système pour localiser des survivants après l'effondrement d'une structure réalisée par l'homme, comprenant une pluralité de dispositifs électroniques (10) comprenant un émetteur sans fil répartis dans la structure ; les dispositifs (10) étant adaptés pour s'auto-organiser en un réseau et pour enregistrer leurs positions en trois dimensions les uns par rapport aux autres en utilisant une position connue d'au moins un des dispositifs, le système comprend en outre au moins un dispositif électronique supplémentaire (20) adapté pour être introduit dans le réseau de telle sorte que les positions des dispositifs électroniques (10) sont recalculées après l'effondrement de la structure en utilisant la position connue du dispositif électronique supplémentaire, **caractérisé en ce que**
le changement de position de chaque dispositif électronique (10) avant et après l'effondrement peut être calculé pour déterminer le trajet de différentes parties de la structure durant l'effondrement.

7. Système selon la revendication 6, dans lequel au moins certains des dispositifs électroniques (10, 20) comprennent un capteur environnemental.

8. Système selon la revendication 6 ou 7, dans lequel les dispositifs électroniques (10, 20) sont des dispositifs à système sur puce.

9. Système selon l'une quelconque des revendications 6 à 8, dans lequel la taille de chaque dispositif électronique (10, 20) est d'environ 100 millimètres cubes ou moins.

10. Système selon l'une quelconque des revendications 6 à 9, dans lequel l'émetteur sans fil dans chaque dispositif électronique (10, 20) a une portée d'environ 1 à 10 mètres.
